# EUROPEAN PATENT SPECIFICATION

(11) **EP 3 498 676 B1**
(45) Date of publication and mention of the grant of the patent: **26.05.2021**
(21) Application number: 18213116.9
(22) Date of filing: 17.12.2018
(51) Int. Cl.: C02F 1/00, C02F 1/28

(54) **INSIDE-OUT WATER PURIFICATION SYSTEM**
WASSERREINIGUNGSSYSTEM VON INNEN NACH AUSSEN
SYSTÈME DE PURIFICATION D'EAU DE L'INTÉRIEUR À L'EXTÉRIEUR

(30) Priority: 15.12.2017 US 201715843757; 15.12.2017 US 201715844001
(43) Date of publication of application: 19.06.2019
(73) Proprietor: Goodrich Corporation, Charlotte, NC 28217-4578 (US)
(72) Inventor: ROACH, Kevin Eddward, Stow, OH 44224 (US); ZISKA, Michael Anthony, Cuyahoga Falls, OH 44221 (US)
(74) Representative: Dehns

(56) References cited:
- WO-A1-99/10076
- GB-A- 2 437 279
- US-A1- 2008 110 820
- US-B1- 9 216 368

## Description

### BACKGROUND

The present disclosure relates to a water purification system and, in particular, to an inside-out water purification system utilized when the water source is placed above the water purification system.

Water purification systems, also known as water purifiers, are utilized in various applications to remove impurities and/or odors from water within water systems. On large passenger vehicles, such as aircraft, at least one water purifier within the water system is utilized to purify the water as the water flows from a water source, such as a tank, to a water faucet or other water dispensing unit. When the aircraft is not in use for an extended period of time, or when the aircraft will be or is parked in below-freezing conditions, it is necessary to fully drain the water from the water system (including the water purifier) to maintain sanitary conditions and prevent components from damage caused by the freezing of the water. Thus, it is important that all water is drained from the purifier. Current water treatment units; such as water purifiers, water filters, and ultraviolet sterilizers; use drain lines to drain the water out of areas of the water purifier that are below the outlet, where water is able to sit/pool in low lying areas and is unable to flow through an outlet of the water purifier through gravity alone. However, these drain lines increase the weight of the system, which decreases the efficiency of the vehicle. Further, the drain lines increase the complexity and the number of components, resulting in a system that is more likely to break down. Thus, a water purifier that is configured to allow water to drain from the system without the need for drain lines is advantageous Prior art documents US2008/110820 A1, GB 2 437 279 A, WO 99/10076 A1, US 9 216 368 B1 also disclose water filters.

### SUMMARY

A water purification system according to the invention is provided in independent device claim 1. Further preferred embodiments are disclosed in dependent claims 2-9. An inside-out liquid purification/filtration system includes a housing and a cartridge. The housing defines an interior space and includes an inlet at a top side of the housing, a fitting at the top side of the housing and inboard of the inlet, and an outlet at a bottom side of the housing. The cartridge is disposed within the interior space and includes a top cap having an orifice and configured to interlock with the fitting to suspend the cartridge within the interior, a bottom cap adjacent to and suspended above the bottom side of the housing, and a filter having an annular shape and extending between the top cap and the bottom cap with the filter defining a hollow vertical column aligned with the orifice such that liquid enters the cartridge vertically through the orifice and exits the cartridge at least partially radially through the filter.

A water purification/filtration system includes a housing defining an interior space with an inlet and an outlet and a cartridge within the interior space of the housing with the cartridge having top cap, a bottom cap, and a filter extending between the top cap and the bottom cap with the top cap interlocking with the housing near the inlet to suspend the cartridge within the interior space.

### BRIEF DESCRIPTION OF THE DRAWINGS

FIG. 1 is a cross-sectional side view of a water purification system.
FIG. 2 is a cross-sectional top view of the water purification system in FIG. 1 taken along line 2-2.

### DETAILED DESCRIPTION

An inside-out liquid purification system is disclosed herein that includes a housing to contain the system and a cartridge within the housing to filter/purify the liquid flowing through the purification system. When discussing the liquid purification system, the liquid is often times water, but the disclosed configuration can be utilized to purify other liquids. Thus, the use of water and liquid in this description should be taken as being interchangeable with one another. Further, when describing the inside-out liquid purification system, the disclosure may also refer to this system as a water purifier and/or a liquid purifier. The purification system is classified as an inside-out system because unfiltered water enters a hollow column at a center of a filter within the water purifier (an "inside" of the filter) and flows outward through the filter to become purified ("out" of the filter) before exiting the housing through an outlet.

While water filtration and purification require different means to remove impurities from the water and are aimed at removing different and/or additional types of impurities, this disclosure uses the two terms interchangeably as the water filtration/purification system described herein can be utilized for either purpose (or both purposes simultaneously depending on the filter used). Thus, while the disclosure and claims describe a "purification" system, it should be understood to also include a "filtration" system, and while the disclosure and claims describe the use of a "filter," it should be understood that a different component can be used in place of the filter to purify the water.

The cartridge, which includes the filter, is attached to the housing at a top such that the cartridge is suspended within the interior space of the housing. Thus, the bottom of the cartridge, which includes a bottom cap at a bottom of the filter, is adjacent to but not abutting a bottom side of the housing, allowing water to flow freely downward after the water has passed through the filter. With the cartridge being suspended above the bottom side of the housing and the bottom side of the housing including no features to prevent the filtered/purified water from flowing out of the housing through the outlet (due to gravity), no amount of water is blocked from exiting the water purifier after the water is no longer provided to the water purifier (i.e., the water system has been shut off).

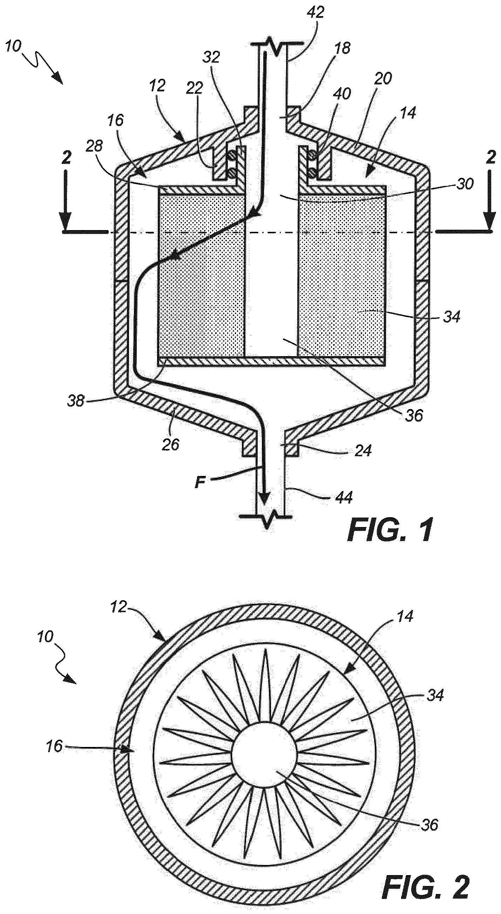

FIG. 1 is a cross-sectional side view of water purification system 10 (also referred to as a water purifier or a liquid purifier), while FIG. 2 is a cross-sectional top view of water purification system 10 taken along line 2-2 in FIG. 1. Water purification system 10 includes housing 12 and cartridge 14. Housing 12 forms interior space 16 and includes inlet 18 at top side 20, fitting 22, and outlet 24 at bottom side 26. Cartridge 14 includes top cap 28 with orifice 30 and port 32, filter 34 with column 36, and bottom cap 38. Between fitting 22 and port 32 are sealing rings 40. Connected to housing 12 at inlet 18 is inlet hose 42, and connected to housing 12 at outlet 24 is outlet hose 44. Flow path F shows a path water takes through water purification system 10.

Housing 12 is the primary structural component of water purification system 10 and provides interior space 16 within which cartridge 14 is located and through which any water intending to be filtered/purified can flow. Housing 12 can be substantially cylindrical in shape with a conically shaped top side 20 and conically shaped bottom side 26. While shown as substantially cylindrical, housing 12 can have any shape suitable to contain cartridge 14 (and water) and provide interior space 16. Housing 12 can be configured to be separable into at least two pieces, such as a top portion and a bottom portion, to allow access to interior space 16 to allow for the installation and removal of cartridge 14. The point at which housing 12 separates can be anywhere along housing 12, such as at a vertical middle as shown in FIG. 1, closer to top side 20, or closer to bottom side 26. Additionally, housing 12 can be permanently sealed shut such that replacement of cartridge 14 entails replacement of water purification system 10. Housing 12 can be constructed from a variety of materials, including a metal, plastic, or a composite material.

Housing 12 further includes inlet 18 in top side 20 that is connectable to inlet hose 42, which in turn is connected to a water source for providing unpurified/unfiltered water to water purification system 10. Inlet 18 can be located at a radial center of top side 20 or another location, such as closer to or at a side of housing 12. Also at top side 20 inboard of inlet 18 is fitting 22, which is configured to interlock with port 32 of top cap 28 to suspend cartridge 14 within interior space 16. Fitting 22 can be vertically/axially aligned (i.e., coaxial) with inlet 18, and can be a downwardly extending (i.e., extending into interior space 16) annular member. Fitting 22 can include a variety of features that allow fitting 22 and port 32 of top cap 28 to interlock and seal, including a threaded feature on both components, tabs with a quarter-turn fastener, and/or one or multiple sealing rings 40. Fitting 22 and port 32 can be configured such that fitting 22 is within port 32 or, as shown in FIG. 1, fitting 22 is outward of port 32.

At bottom side 26 is outlet 24, which is connectable to outlet hose 44. Outlet 24 allows purified/filtered water to exit interior space 16 and flow through outlet hose 44 to a faucet or other water dispensing unit. Bottom side 26 of housing 12 has conical shape which utilizes gravity to aid the flow of purified/filtered water out of the interior space 16, as shown in FIG 1.

Cartridge 14 is within interior space 16 of housing 12, but can be configured to be removed and replaced when needed. As shown in FIGS. 1 and 2, cartridge 14 is cylindrical in shape to fit within the corresponding cylindrical interior space 16 of housing 12. However, cartridge 14 can be configured to have another shape. Cartridge 14 can be held in place within interior space 16 only at port 32 of top cap 28 by fitting 22 of housing 12. As will be described below, this configuration allows bottom cap 38 to be suspended above bottom side 26 of housing 12, allowing water to easily flow out of housing 12 when water purification system 10 is drained and providing no volume within housing 12 where water can pool/sit.

Top cap 28 is an annular disk having orifice 30 at a center, and is configured to interlock with fitting 22 through the use of port 32. Port 32 can be an upwardly extending annular member (with orifice 30 therethrough) that interlocks within fitting 22 through the use of various means, such as a threaded connection. Port 32 can include other features that allow top cap 28 to attach to and seal to fitting 22, such as one or multiple sealing rings 40. Port 32 and fitting 22 can be configured to allow port 32 to be installed and removed from fitting 22 in order to remove and replace cartridge 14. Orifice 30 in top cap 28 allows unpurified/unfiltered water that enters inlet 18 to flow into column 36, where the water then flows through filter 34. Orifice 30 can have any suitable size and/or shape, and does not necessarily have to be located at a center of top cap 28 (i.e., orifice 30 does not necessarily have to be vertically aligned with the center of top cap 28), and orifice 30 can be off-center from the center of top cap 28.

Between top cap 28 and bottom cap 38 is filter 34, which is cylindrical in shape and includes column 36 at a center. Filter 34 is made up of a filter medium, which can be a pleated media that has an annular fan-like configuration constructed from any known water filtering/purifying medium (as shown in FIG. 2). Additionally, the filter medium forming filter 34 can be a particulate medium or some other configuration, such as with a carbon particle filter. While filter 34 is shown as a pleated media that has a fan-like configuration, filter 34 can be configured as a spiral or have concentric rings.

Column 36 is a hollow vertical cylindrically-shaped void at the center of filter 34 that allows unfiltered/unpurified water to enter an inside of filter 34 and flow at least partially radially outward through filter 34 to be filtered/purified (i.e., an inside-out filtration/purification configuration). After flowing through filter 34, the filtered/purified water then flows out of housing 12 through outlet 24. An inside-out filtration/purification configuration may be advantageous when/if cartridge 14 needs to be replaced as the impurities filtered out by filter 34 are contained on the inside of cartridge 14 near column 36. With the impurities contained within cartridge 14, maintenance and other personnel are not exposed to those impurities when replacing filter 34. While filter 34 is shown having a cylindrical shape with column 36 at the center, filter 34 can have other configurations. While filter 34 is described as a fluid filter, the disclosed configuration could include a purification medium instead of a filter or in addition to a filter medium.

Bottom cap 38 is shown as a disk forming a bottom of cartridge 14 at a bottom of filter 34. However, bottom cap 38 can have other shapes and features that extend radially outward to contact walls of housing 12 to provide support to cartridge 14 against movement, such as vibration. These shapes and features can include outward extending teeth and/or scallops, a wavy or notched configuration, of other types of stabilizing features. Bottom cap 38 prevents unfiltered/unpurified water from flowing out of cartridge 14 any other way besides through filter 34. While bottom cap 38 is shown as a cylindrical end cap that extends outward to or passed filter 34, bottom cap 38 can have other configurations, such as a configuration that only covers the bottom of column 36. If filter 34 is a pleated media having a fan-like configuration, bottom cap 38 should extend to or past filter 34 to prevent unfiltered water from slipping past filter 34 without being sufficiently filtered/purified. However, if filter 34 is a solid material, such as a foam or particles bonded together, bottom cap 38 may be configured to only cover the bottom of column 36.

As shown in FIG. 1, cartridge 14 is suspended above bottom side 26 of housing 12 such that bottom cap 38 is adjacent to but not abutting bottom side 26. Cartridge 14 is suspended through the interlocking of fitting 22 in housing 12 and port 32 in top cap 28. While bottom cap 38 is suspended above bottom side 26 of housing 12, bottom cap 38 can be in contact with the walls of housing 12 to provide radial support to cartridge 14 to minimize movement of cartridge 14 relative to housing 12, which can be caused by vibration of water purification system 10.

With cartridge 14 being suspended above bottom side 26, and bottom side 26 including no upward extending features to prevent the filtered/purified water from flowing out of housing 12 through outlet 24, no amount of filtered/purified water is blocked from exiting housing 12 (after passing through filter 34). Therefore, water purification system 10 provides an inside-out purification configuration that also allows the water to drain out of the system (due to gravity) when the water is no longer provided to water purification system 10, ensuring water purification system 10 remains sanitary, functional, and undamaged because water is not present within water purification system 10.

### Discussion of Possible Embodiments

The following are non-exclusive descriptions of possible embodiments of the present invention.

An inside-out liquid purification system includes a housing and a cartridge. The housing defines an interior space and includes an inlet at a top side of the housing, a fitting at the top side of the housing and inboard of the inlet, and an outlet at a bottom side of the housing. The cartridge is disposed within the interior space and includes a top cap having an orifice and configured to interlock with the fitting to suspend the cartridge within the interior space, a bottom cap adjacent to and suspended above the bottom side of the housing, and a filter having an annular shape and extending between the top cap and the bottom cap with the filter defining a hollow vertical column aligned with the orifice such that liquid enters the cartridge vertically through the orifice and exits the cartridge at least partially radially through the filter.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An inside-out liquid purification system comprising:
a housing (12) defining an interior space (16), the housing comprising:
an inlet (18) at a top side (20) of the housing;
a fitting (22) at the top side of the housing and inboard of the inlet; and
an outlet (24) at a bottom side (26) of the housing, the bottom side of the housing being conical in shape;
a cartridge (14) disposed within the interior space, the cartridge comprising:
a top cap (28) having an orifice (30) and configured to interlock with the fitting to suspend the cartridge within the interior space;
a bottom cap adjacent to and suspended above the bottom side of the housing; and
a filter (34) having an annular shape and extending between the top cap and the bottom cap, the filter defining a hollow vertical column aligned with the orifice such that liquid enters the cartridge vertically through the orifice and exits the cartridge radially through the filter,
wherein the bottom cap of the cartridge is not in contact with the bottom side of the housing to form a void between the cartridge and the bottom side of the housing so that no upward extending features are present to prevent liquid from flowing out of the housing through the outlet in the bottom side of the housing.

2. The inside-out liquid purification system of claim 1, further comprising:
an inlet (42) hose extending between a liquid source and the inlet in the housing.

3. The inside-out liquid purification system of claim 1 or 2, further comprising:
an outlet hose (44) connected to the outlet in the housing.

4. The inside-out liquid purification system of claim 1, 2 or 3 wherein the fitting of the housing is centered about the inlet, the orifice in the top cap is aligned with the inlet, and the top cap includes a port that is centered about the orifice and extends upward to be within and interlock with the fitting, and preferably wherein the fitting in the housing and the port in the top cap are cylindrical, and/or preferably further comprising:
at least one sealing ring (40) between an outside of the port and an inside of the fitting.

5. The inside-out liquid purification system of any preceding claim, wherein the housing is separable into at least two pieces to allow access to the interior space of the housing to allow for the cartridge to be installed within the interior space of the housing.

6. The inside-out liquid purification system of any preceding claim, wherein the top cap (28) is an annular disk with the orifice at a center and the bottom cap (38) is a circular disk.

7. The inside-out liquid purification system in any preceding claim, wherein the interlock between the fitting and the top cap uses tabs with a quarter-turn fastener.

8. The inside-out liquid purification system in any preceding claim, wherein the inlet is vertically aligned with the outlet.

9. The inside-out liquid purification system in any preceding claim, wherein the filter has an annular fan-like configuration.

## Patentansprüche

1. Flüssigkeitsreinigungssystem von innen nach außen, das Folgendes umfasst:
ein Gehäuse (12), das einen Innenraum (16) definiert, wobei das Gehäuse Folgendes umfasst:
einen Einlass (18) an einer oberen Seite (20) des Gehäuses;
ein Passstück (22) an der oberen Seite des Gehäuses und auf der Innenseite des Einlasses; und
einen Auslass (24) an einer unteren Seite (26) des Gehäuses, wobei die untere Seite des Gehäuses eine konische Form aufweist;
eine Kartusche (14), die innerhalb des Innenraums angeordnet ist, wobei die Kartusche Folgendes umfasst:
eine obere Kappe (28), die eine Öffnung (30) aufweist und dazu konfiguriert ist, sich mit dem Passstück zu verriegeln, um die Kartusche innerhalb des Innenraums aufzuhängen;
eine untere Kappe, die sich benachbart zu der unteren Seite des Gehäuses befindet und über dieser aufgehängt ist; und
einen Filter (34), der eine ringförmige Form aufweist und sich zwischen der oberen Kappe und der unteren Kappe erstreckt, wobei der Filter eine hohle vertikale Säule definiert, die derart an der Öffnung ausgerichtet ist, dass Flüssigkeit vertikal über die Öffnung in die Kartusche eintritt und radial durch den Filter aus der Kartusche austritt,
wobei die Bodenkappe der Kartusche die untere Seite des Gehäuses nicht berührt, um einen Hohlraum zwischen der Kartusche und der unteren Seite des Gehäuses zu bilden, sodass keine sich nach oben erstreckenden Merkmale vorhanden sind, um zu verhindern, das Flüssigkeit durch den Auslass in der unteren Seite des Gehäuses aus dem Gehäuse fließt.

2. Flüssigkeitsreinigungssystem von innen nach außen nach Anspruch 1, das ferner Folgendes umfasst:
einen Einlassschlauch (42), der sich zwischen einer Flüssigkeitsquelle und dem Einlass in dem Gehäuse erstreckt.

3. Flüssigkeitsreinigungssystem von innen nach außen nach Anspruch 1 oder 2, das ferner Folgendes umfasst:
einen Auslassschlauch (44), der mit dem Auslass in dem Gehäuse verbunden ist.

4. Flüssigkeitsreinigungssystem von innen nach außen nach Anspruch 1, 2 oder 3, wobei das Passstück des Gehäuses um den Einlass zentriert ist, die Öffnung in der oberen Kappe an dem Einlass ausgerichtet ist und die obere Kappe einen Anschluss beinhaltet, der um die Öffnung zentriert ist und sich nach oben erstreckt, um sich innerhalb des Passstücks zu befinden und sich mit diesem zu verriegeln, und wobei das Passstück in dem Gehäuse und der Anschluss in der oberen Kappe vorzugsweise zylindrisch sind und/oder das vorzugsweise ferner Folgendes umfasst:
mindestens einen Dichtungsring (40) zwischen einer Außenseite des Anschlusses und einer Innenseite des Passstücks.

5. Flüssigkeitsreinigungssystem von innen nach außen nach einem der vorstehenden Ansprüche, wobei das Gehäuse in mindestens zwei Teile getrennt werden kann, um Zugang zu dem Innenraum des Gehäuses zu erlauben, um zu ermöglichen, dass die Kartusche innerhalb des Innenraums des Gehäuses installiert werden kann.

6. Flüssigkeitsreinigungssystem von innen nach außen nach einem der vorstehenden Ansprüche, wobei die obere Kappe (28) eine ringförmige Scheibe mit einer Öffnung in einer Mitte und die untere Kappe (38) eine kreisförmige Scheibe ist.

7. Flüssigkeitsreinigungssystem von innen nach außen nach einem der vorstehenden Ansprüche, wobei die Verriegelung zwischen dem Passstück und der oberen Kappe Deckel mit einem Vierteldrehverschluss verwendet.

8. Flüssigkeitsreinigungssystem von innen nach außen nach einem der vorstehenden Ansprüche, wobei der Einlass vertikal an dem Auslass ausgerichtet ist.

9. Flüssigkeitsreinigungssystem von innen nach außen nach einem der vorstehenden Ansprüche, wobei der Filter eine ringförmige lüfterähnliche Konfiguration aufweist.

## Revendications

1. Système de purification de liquide de l'intérieur à l'extérieur comprenant :
un boîtier (12) définissant un espace intérieur (16), le boîtier comprenant :
une entrée (18) au niveau d'un côté supérieur (20) du boîtier ;
un raccord (22) au niveau du côté supérieur du boîtier et à l'intérieur de l'entrée ; et
une sortie (24) au niveau d'un côté inférieur (26) du boîtier, le côté inférieur du boîtier étant de forme conique ;
une cartouche (14) disposée à l'intérieur de l'espace intérieur, la cartouche comprenant :
un capuchon supérieur (28) ayant un orifice (30) et configuré pour s'interverrouiller avec le raccord afin de suspendre la cartouche à l'intérieur de l'espace intérieur ;
un capuchon inférieur adjacent au boîtier et suspendu au-dessus du côté inférieur de celui-ci ; et
un filtre (34) ayant une forme annulaire et s'étendant entre le capuchon supérieur et le capuchon inférieur, le filtre définissant une colonne verticale creuse alignée avec l'orifice de sorte que du liquide entre dans la cartouche verticalement à travers l'orifice et sort de la cartouche radialement à travers le filtre,
dans lequel le capuchon inférieur de la cartouche n'est pas en contact avec le côté inférieur du boîtier pour former un vide entre la cartouche et le côté inférieur du boîtier de sorte qu'aucun élément s'étendant vers le haut n'est présent pour empêcher du liquide de s'écouler hors du boîtier à travers la sortie dans le côté inférieur du boîtier.

2. Système de purification de liquide de l'intérieur à l'extérieur selon la revendication 1, comprenant en outre :
un tuyau d'entrée (42) s'étendant entre une source de liquide et l'entrée dans le boîtier.

3. Système de purification de liquide de l'intérieur à l'extérieur selon la revendication 1 ou 2, comprenant en outre :
un tuyau de sortie (44) relié à la sortie dans le boîtier.

4. Système de purification de liquide de l'intérieur à l'extérieur selon la revendication 1, 2 ou 3, dans lequel le raccord du boîtier est centré autour de l'entrée, l'orifice dans le capuchon supérieur est aligné avec l'entrée, et le capuchon supérieur comporte une ouverture qui est centrée autour de l'orifice et s'étend vers le haut pour être à l'intérieur et s'interverrouiller avec le raccord, et de préférence dans lequel le raccord dans le boîtier et l'ouverture dans le capuchon supérieur sont cylindriques, et/ou de préférence comprenant en outre :
au moins une bague d'étanchéité (40) entre un extérieur de l'ouverture et un intérieur du raccord.

5. Système de purification de liquide de l'intérieur à l'extérieur selon une quelconque revendication précédente, dans lequel le boîtier est séparable en au moins deux pièces pour permettre l'accès à l'espace intérieur du boîtier afin de permettre à la cartouche d'être installée à l'intérieur de l'espace intérieur du boîtier.

6. Système de purification de liquide de l'intérieur à l'extérieur selon une quelconque revendication précédente, dans lequel le capuchon supérieur (28) est un disque annulaire avec l'orifice au niveau d'un centre et le capuchon inférieur (38) est un disque circulaire.

7. Système de purification de liquide de l'intérieur à l'extérieur selon une quelconque revendication précédente, dans lequel l'interverrouillage entre le raccord et le capuchon supérieur utilise des pattes avec une attache quart-de-tour.

8. Système de purification de liquide de l'intérieur à l'extérieur selon une quelconque revendication précédente, dans lequel l'entrée est alignée verticalement avec la sortie.

9. Système de purification de liquide de l'intérieur à l'extérieur selon une quelconque revendication précédente, dans lequel le filtre a une configuration de type ventilateur annulaire.
